Europäisches Patentamt

European Patent Office

Office européen des brevets

(11) Publication number: **0 084 949**
**A2**

(12) # EUROPEAN PATENT APPLICATION

(21) Application number: **83300247.0**

(22) Date of filing: **19.01.83**

(51) Int. Cl.³: **G 05 B 19/42, A 43 D 25/053**

(30) Priority: **21.01.82 GB 8201703**

(43) Date of publication of application: **03.08.83**
**Bulletin 83/31**

(84) Designated Contracting States: **DE FR GB IT**

(71) Applicant: **THE BRITISH UNITED SHOE MACHINERY COMPANY LIMITED, Union Works Belgrave Road, Leicester LE4 5BX (GB)**

(84) Designated Contracting States: **GB**

(71) Applicant: **USM Corporation, 426 Colt Highway, Farmington Connecticut 06032 (US)**

(84) Designated Contracting States: **DE FR IT**

(72) Inventor: **Reader, Philip, 297 Main Street, Thornton Leicestershire (GB)**
Inventor: **Walter, Andrew Gordon Neil, 76 Meeting Street, Quorn Leicestershire (GB)**

(74) Representative: **Atkinson, Eric et al, P.O. Box No. 88 Belgrave Road, Leicester LE4 5BX (GB)**

(54) **Method of determining an operating path of a tool.**

(57) Information concerning the path of an adhesive-applying nozzle (28) and/or a lasting roller (176) relative to a three-dimensional shoe bottom surface is obtained using a flat insole in combination with a grid of flexible transparent material. The grid has a datum (10), a centre line (12); [representing a linear path of a tool carrier (26)] and a plurality of transverse lines (14), the spacing between each pair of adjacent transverse lines representing unit time. The transverse lines adjacent to the datum are more closely spaced than those beyond, the principal component of movement of the tool (as opposed to the tool carrier) in relation to the shoe bottom, at the datum (i.e. the toe end), being widthwise rather than lengthwise. Heel height information may also be supplied to the computer, which is programmed to modify the digitised information accordingly for the region from the ball region to the heel (which constitutes some 60% to 65% of the overall shoe length). The information may also be modified according to the particular arrangement of the nozzle and roller supports.

Method of determining an
Operating path of a tool

This invention is concerned with a method of
determining an operating path of a tool in relation to
a three-dimensional surface of a work piece, and is
especially, but not exclusively, suitable for determining
an operating path of a shoe-making tool in relation to
a shoe bottom.  The term "shoe" where used herein is used
generically as indicating articles of outer footwear
generally, including such an article in the course of
its manufacture.

The method is especially suitable for determining
an operating path of a tool which is mounted on a carrier
movable along a linear path, is movable relative to the
carrier widthwise of such path, and is also resiliently
urged heightwise of said path into engagement with the work
piece surface, numerically controlled motors (as herein
defined) being provided for effecting movement of the
carrier along its path and of the tool widthwise of such
path, said motors being caused to operate in response to
drive signals generated and supplied thereto by computer
control means in accordance with stored digitised information, including digitised co-ordinate axis values for
a plurality of selected points along the operating path
of the tool, from which information the operating path
of the tool can be derived.  One machine in which a tool
is so mounted and caused to operate is described in the
specification of our European  patent application No.
81305977.1.

The term "numerically controlled motor" where used
herein is to be understood as referring to a motor the
operation of which is controlled by control pulses
supplied thereto in accordance with digitised information
appropriate to the desired operation of the motor.  Where two motors operate in conjunction with one another, e.g. to move a tool along a desired path, the digitised information is usually in the form of digitised co-ordinate values. Examples of such motors are stepping motors and d.c. servomotors.

Various schemes and arrangements have been proposed and devised for determining an operating path of a tool which is moved under the control of numerically controlled motors. Thus, for example in U.K. patent specification No. 1552347 is described an automatic sewing machine provided with control means operable under the control of an operator for generating control signals which are supplied to the computer and in response to which drive signals are generated for supply to numerically controlled motors, said control means being effective to cause a work support of the machine to be moved to bring selected points seriatim into registration with a datum, and the computer being utilized to determine co-ordinate axis values for each of the selected positions of the work support, recording means being provided for causing said co-ordinate axis values to be recorded on an information-carrying medium. Thus, the machine in which an operation is to be performed is also utilized, under manual control, for determining the operating path which a tool will follow in the operation of the machine. In other cases, a line drawing of the operating path may be provided, which line is then followed by an optical line follower connected to a computer, and the computer determines and stores co-ordinate axis values for selected points along said line; this system is favoured in many n.c.machine tools.

In the first instance referred to above, production time must be lost by using the machine for digitising purposes, whereas in the second instance a relatively sophisticated piece of equipment is required.

3.

It is the object of the present invention to
provide an improved method of determining an operating
path of the tool in relation to a three-dimensional surface
of a work piece, which method is simple to execute, can
be carried out away from the machine, and requires
relatively simple equipment.

It is a further object of the present invention
to provide a machine for performing a shoe-making operation
on shoe bottoms, which machine is particularly suited for
use in combination with the method in accordance with the
invention, and it is a still further object of the invention to
provide simple equipment, in the form of a grid, for putting
said method into operation.

The invention thus provides, in one of its several
aspects, a method of determining an operating path of a tool
in relation to a three-dimensional surface of a workpiece -
which tool is mounted on a carrier movable along a linear
path, is movable relative to the carrier widthwise of such
path, and is also resiliently urged heightwise of said
path into engagement with the workpiece surface, numerically
controlled motors (as herein defined) being provided for
effecting movement of the carrier along its path and of
the tool widthwise of said path, said motors being caused
to operate in response to drive signals generated and supplied
thereto by computer control means in accordance with stored
digitised information, including digitised co-ordinate axis
values for a plurality of selected points along the operating
path of the tool, from which information the operating path of
the tool can be derived, - the method comprising (i) procuring
a grid having a datum point, a centre line, and a plurality
of lines arranged at spaced intervals along the centre line
and extending transversely thereof, the transverse lines

0084949

being provided with a graduated scale, wherein said centre
line corresponds to the linear path of the tool carrier
and each interval between adjacent transverse lines
represents a unit of time in the movement of the tool
carrier along its linear path, and further the intervals
between adjacent transverse lines are of different lengths,
said lines being arranged more closely to each other where
a principal component of the movement of the tool along
its operating path is to be widthwise of the linear path
of the tool carrier, and being more spaced from one another
where a principal component of each movement is to be along
said linear path, (ii) procuring an element an edge portion
of which corresponds to the operating path of the tool, when
said element is shaped to the surface of the workpiece, but
which is flat, or substantially flat, prior to being so
shaped, and placing said element, in its flat, or substantially flat, condition, on the grid with a datum portion
thereof at the datum point of the grid, and with a longitudinal centre line thereof coincident, or substantially
coincident, with the centre line of the grid, and (iii)
reading off the points of intersection between each transverse line and the edge portion of the element and storing
such points as a succession of digitised co-ordinate axis
values in a memory device, said values forming part of
the digitised information from which the operating path
of the tool can be derived.

This method in accordance with the invention is
especially, but not exclusively, suitable for use where
the work piece is constituted by the bottom of the shoe
on a last, and the element by an insole which matches the
last bottom, the arrangement being such that the insole
can then be used in a flat condition, for determining the
operating path of a shoe-making tool, even though the shoe
bottom contour is other than flat.

Where the shoe bottom is other than flat, or
substantially so, e.g. in the case of ladies' high-heeled
shoes, the portion of the shoe bottom from the toe end to the so-called ball region can still be considered
to be flat or substantially so, and only the portion from
the ball region to the heel end need be considered to
have any significant heightwise contour.  In practice,
the proportions of the shoe bottom are such that the
distance from the toe end to the ball region is approximately
35% to 40% of the total shoe length, and from
the ball region to the heel end 60% to 65% of said length.
The amount of incline of the rearward portion, furthermore,
will of course depend essentially upon the heel height.
Consequently, in the case of a high-heeled shoe, preferably
the digitised co-ordinate axis values relating to the
operating path of the tool from the ball region  to the
heel end of the shoe (i.e. over a portion of the insole
extending over between 60% and 65% thereof from the heel
end) are modified according to the height of the heel of
the shoe, by the computer control means.

Furthermore, when the method is used in combination
with a particular machine, the mounting of the tool may
also affect the operating path thereof, depending upon
the amount of heightwise contour on the shoe bottom shape.
Thus, where the tool is mounted for pivotal movement about
an axis extending widthwise of the linear path of the tool
carrier, the modifications made to the digitised co-ordinate
axis values as aforesaid may also take into account both
the position of the pivot in relation to the path of the
tool carrier and also the distance of the operating position
of the tool from its pivot.

As already mentioned, the method in accordance with
the invention may be used in conjunction with a machine of
the type described in the aforementioned European patent
application, said machine being a machine for performing a
combined toe and side lasting operation on the shoes.  In
said machine, furthermore, the tool to be guided along
marginal portions of the shoe bottom may be an adhesive-
applying nozzle or a lasting roller, which is rotatable about an axis extending widthwise of the linear path of
the tool carrier and which is provided with a wiping element
disposed helically about the circumference thereof, or
indeed the machine may be provided with both adhesive-applying
nozzles and lasting rollers of the aforementioned type,
each of which operates under the control of a numerically
controlled motor in response to drive signals generated
and supplied thereto by computer control means in accordance
with digitised information obtained using a method in
accordance with the invention.

As regards the grid, the transverse lines thereof
may be straight, circular or ellipical. Where they are
straight, they preferably extend perpendicularly to the centre
line, and, where arcuate, the tangent thereto at the
point of intersection with the centre line is perpendicular
to the centre line. Furthermore, where the element used
in conjunction with the grid in carrying out the method
in accordance with the invention is an insole, preferably
the datum portion of the insole is the toe end portion
thereof, since it is at the toe end in particular that
a principal component of the movement of the tool along
its operating path will be widthwise of the linear path
of the tool carrier, and this will be true regardless of
the size or style of the insole.


There now follows a detailed description, to be
read with reference to the accompanying drawings, of a
grid in accordance with the invention, a method in accordance
with the invention using such a grid, and a machine in
accordance with the invention to which the particular
method hereinafter described is suited. It will of course
be appreciated that this grid, method and machine have been
selected for description merely by way of exemplification
of the invention and not by way of limitation thereof.

In the accompanying drawings:-

Figure 1 shows the grid in accordance with the invention; and

Figure 2 shows a fragmentary side view of the machine in accordance with the invention, showing details of the mounting of an adhesive-applying nozzle and of a lasting roller thereof.

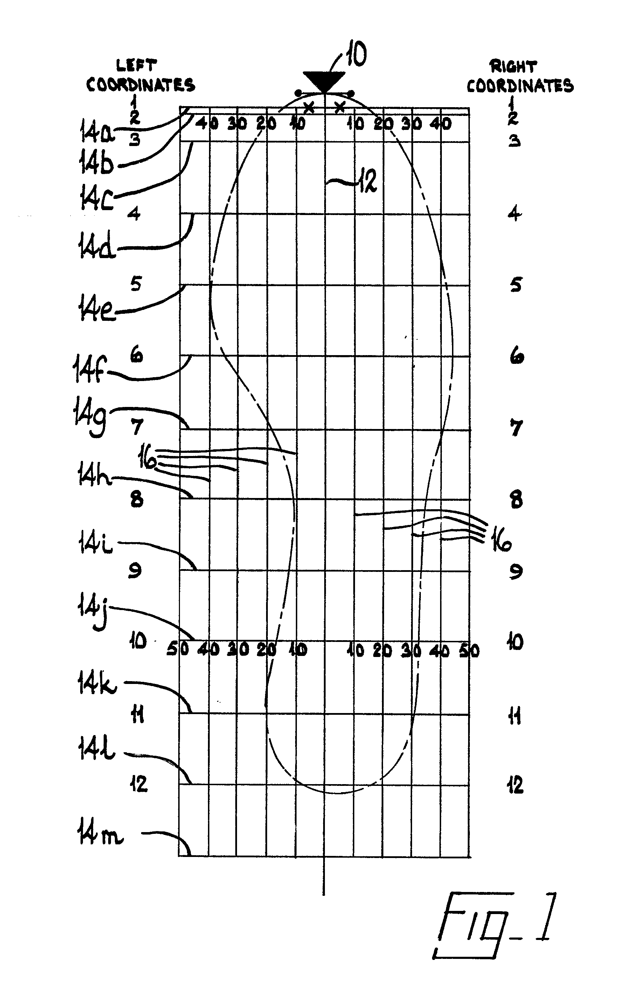

The grid in accordance with the invention comprises a line drawing on a sheet of flexible transparent material. The drawing consists of a datum, indicated by an arrow head 10, located at one end of a centre line 12, and a plurality of transverse lines 14 which intersect the centre line perpendicularly and are spaced progressively away from the datum. The first transverse line 14a represents a start position for tools (e.g. adhesive-applying nozzles)of which the operating path is to be determined; it will be observed that this line 14a is thus spaced from the datum 10, since the operating path of the tools will be spaced inwardly (e.g. by a distance of 5mm) from the margin of the shoe bottom in the case of adhesive-applying nozzles. The two points marked X in Fig.1 represent the start position of the tools. Furthermore, the next two transverse lines 14b,14c are relatively closely spaced while the fourth and subsequent transverse lines 14d, 14e etc. are regularly spaced one from the other. Each transverse line is also provided with a graduated scale, assisted by a series of scale lines 16 which extend parallel to the centre line 12 at regular intervals therefrom.

The overall length of the centre line is such that it will accommodate any model size insole; generally speaking, a model size will be in the middle of the expected size range for any given style, the middle of the range being most acceptable from the point of view of grading up and down for the other sizes within the style.

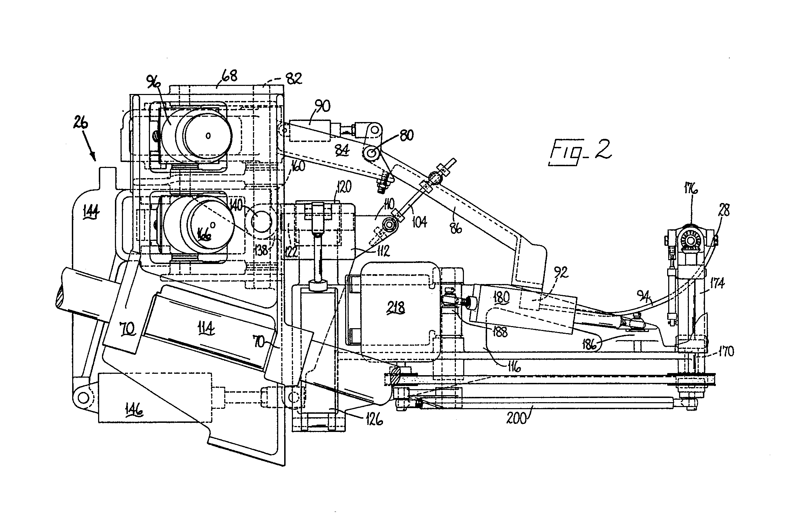

The method in accordance with the invention utilizes the aforementioned grid for determining an operating path along marginal portions of a shoe bottom of two adhesive-applying nozzles 28 (Fig.2) and two lasting rollers 176 of the machine in accordance with the invention, details of which will be found set out in the aforementioned U.K. Patent Application. So far as concerns the present invention, the nozzles and rollers are mounted on a tool carrier generally designated 26 which is mounted on slide rods 114 for sliding movement along a rectilinear path. The carrier 26 comprises a transverse bridge member 68 lugs 70 of which support the member on the slide rods, a first stepping motor (not shown) being provided which operates through drive belts (also not shown) for effecting controlled sliding movement of the carrier.

Each nozzle 28 is constituted by an end of a supply pipe 94 supported in a melt chamber body 92, itself carried on one arm of a bell crank lever 86. The lever 86 is carried, by a pivot pin 80, on a support arm 84 mounted, by a further pivot pin 82, in the bridge member 68. The pivot pin 82 allows its associated nozzle to pivot widthwise of the path of tool carrier 26, while the pivot pin 80 allows the nozzle to pivot heightwise of said path. Furthermore, for effecting such widthwise movement of the nozzles, two second stepping motors 96, are provided, mounted in the bridge member 68, and one associated with each nozzle, each motor being connected to a rearward end of a support arm 84 carrying its associated nozzle. For effecting heightwise pivoting movement of the nozzle, the other arm of the bell crank lever 86 is operatively connected to a piston-and-cylinder arrangement 90, which is also mounted on the support arm 84.

Each lasting roller 176 is rotatable about an axis extending widthwise of the path of movement of the carrier 26, is generally frusto-conical and is provided about its circumference with a helically disposed wiping element. for effecting such rotation of the lasting roller, an electric motor 218 is provided, operatively connected through a system of belts, pulleys and inter-meshing gears. Each roller is supported by a carrier 174 at the end of an arm 116, said support being mounted for pivotal movement, about a pivot pin 170, under the action of a piston-and-cylinder arrangement 180 which acts between a lug 186 on the arm 116 and a lever 188 which is itself mounted for pivotal movement and is operatively connected, through a rod 200, with the carrier 174.

Each arm 116 has, at its rearward end, an integral collar portion 120 which is carried on a horizontal pivot pin 122, the arm thus being pivotal, about an axis extending lengthwise of the shoe bottom, on said pin. For effecting such movement, furthermore, a piston-and-cylinder arrangement 126 is provided, acting between the arm 116 and a casting 112 by which the pivot pin 122 is supported. The casting 112 itself has a rearwardly extending collar portion 138 for receiving a transverse pivot pin 140, said pin being supported in a further casting 144. The casting 112, and thus the arm 116 therewith, can thus pivot about an axis extending widthwise of the shoe bottom, and for effecting such movement a piston-and- cylinder arrangement 146 is provided, which acts between the further casting 144 and the casting 112. The further casting 144 has, at its forward end, an integral collar portion 160 which receives the pivot pin 82 carried by the bridge member 68, so that the further casting 144, and thus the arm 116 therewith, is mounted for pivotal movement about the axis extending heightwise of the shoe bottom. Furthermore, for effecting such pivotal movement of each lasting roller, the third stepping motors 166 are provided, mounted in the bridge member 68, each motor being operatively connected to the further casting 144 by which its associated lasting roller 116 is carried.

It will thus be appreciated that, for effecting movement of the tool carrier 26, and thus of the nozzles 28 and lasting rollers 176 thereof, along its rectilinear path (which extends generally lengthwise of the shoe bottom to be operated upon), the first stepping motor is provided, while, for effecting movement widthwise of said path, of the nozzles 28 and lasting rollers 176, respectively the second and third stepping motors 96, 166 are provided, so that, by supplying appropriate drive signals to said motors, the paths of both the nozzles and the lasting rolls along X and Y co-ordinate axes can be effected. Furthermore, the piston-and-cylinder arrangements 90 cause the nozzles to be urged resiliently against the shoe bottom, heightwise of said path, while the piston-and-cylinder arrangements 146 similarly urge the lasting rollers resiliently heightwise against the shoe bottom. The piston-and-cylinder arrangements 126 and 180, on the other hand, effect tilting movement of the lasting rollers respectively about axes extending generally lengthwise and generally heightwise of the said path.

The method in accordance with the invention is concerned with providing appropriate digitised information by which computer control means of the machine can operate to generate and supply appropriate drive signals to said stepping motors. To this end, prior to a particular style of shoe being operated upon in the machine, an insole suitable for a model size shoe in the style is procured and is placed, in a flat, or substantially flat, condition, on a suitable support table, and the grid in accordance to the invention is then placed thereover, with the datum of the grid located at the toe end of the insole, and with the centre line 12 of the grid extending generally coincident with the longitudinal centre line of the forepart of the insole. (When a shoe is supported in the machine in accordance with the invention, the off-set of the heel end portion, according to whether the shoe is a left or a right, is accommodated by the heel support.)

With the grid thus located, the points of intersection between each side of the insole and each of the transverse lines 14, starting from the datum point, are then read off in numerical form, using the graduated scales, and these readings are then presented to the computer control means, through an input device (not shown) of the machine, including a keyboard, as a series of digits, for both the left hand and right hand side of the insole.  Other information may also be supplied to the computer control means at this stage, namely information concerning the heel height of the shoe style and also information relating to the desired angular relationship between each lasting roller and the shoe bottom.  The angle of tilt of each roller about the lengthwise axis will of course be determined according to the lateral contour of the shoe bottom, while the angular orientation about the heightwise axis will depend upon the curvature, viewed in plan, of the shoe bottom.

By providing a suitable identification for this set of information, furthermore, the information can then be stored in the memory of the computer and can be retrieved whenever the shoe style is to be presented to the machine.

With this information stored, the digitised information can then be used for controlling the path of both the nozzles and the lasting rollers in relation to the bottom of the shoe presented to the machine.  It will of course be appreciated that, depending upon the height of the heel the overall length of the shoe will be foreshortened in relation to the overall length of the insole; hence the supplying  of the heel height information to the computer control means.  The computer control means is programmed to modify  the digitised information supplied thereto according to the heel height information, and furthermore the programme also takes into account both the position of the pivot pin 140 in relation to the roller and the distance by which said pivot pin is spaced from its associated roller. It will be appreciated that, because, for achieving heightwise movement of each lasting roller, the aforementioned pivoting arrangement is provided, such pivoting movement will have a component which is opposed to the forward movement of the tool carrier 26, so that to some extent the pivoting movement of the arms compensates for the foreshortening of the overall length of the shoe in relation to that of the insole. In cases of higher heels, however, such an effect is not in itself sufficient.

For shoes with higher heel heights, therefore, the overall shoe length is regarded as consituting a toeward flat portion and a heelward inclined portion in proportions 3:5. Essentially, the programme of the computer control means, calculates, on the basis of Pythagoras' theorem, the actual linear path of the tool carrier 26 required to accommodate the known actual length of the insole, such calculations being of course modified according to the information relating to the relationship between each lasting roller and its associated pivot pin 140.

It will thus be appreciated that, by using the method in accordance with the invention, a relatively simple digitising system is provided, utilizing a readily available element, viz. the insole, for obtaining the basic required information, and, using such information, each tool, whether nozzle or roller, can be caused to follow the three-dimensional shoe bottom shape.

Claims:

1.    Method of determining an operating path of
a tool in relation to a three-dimensional surface of a
workpiece - which tool is mounted on a carrier movable
along a linear path, is movable relative to the carrier
widthwise of such path, and is also resiliently urged
heightwise of said path into engagement with the workpiece
surface, numerically controlled motors (as herein defined)
being provided for effecting movement of the carrier along
its path and of the tool widthwise of said path, said
motors being caused to operate in response to drive
signals generated and supplied thereto by computer control
means in accordance with stored digitised information,
including digitised co-ordinate axis values for a
plurality of selected points along the operating path of
the tool, from which information the operating path of
the tool can be derived, - characterised by the steps
of -

       (i)    procuring a grid having a datum point, a
centre line, and a plurality of lines arranged at spaced
intervals along the centre line and extending transversely
thereof, the transverse lines being provided with a
graduated scale, wherein said centre line corresponds to
the linear path of the tool carrier and each interval
between adjacent transverse lines represents a unit of
time in the movement of the tool carrier along its linear
path, and further the intervals between adjacent transverse
lines are of different lengths, said lines being arranged
more closely to each other where a principal component of
the movement of the tool along its operating path is to
be widthwise of the linear path of the tool carrier, and
being more spaced from one another where a principal
component of each movement is to be along said linear path,

       (ii) procuring an element an edge portion of which
corresponds to the operating path of the tool, when said element is shaped to the surface of the workpiece, but which is flat, or substantially flat, prior to being so shaped, and placing said element, in its flat, or substantially flat, condition, on the grid with a datum portion thereof at the datum point of the grid, and with a longitudinal centre line thereof coincident, or substantially coincident, with the centre line of the grid, and

(iii)   reading off the points of intersection between each transverse line and the edge portion of the element and storing such points as a succession of digitised co-ordinate axis values in a memory device, said values forming part of the digitised information from which the operating path of the tool can be derived.

2.   Method according to Claim 1 characterised in that the transverse lines of the grid are straight and extend perpendicularly to the centre line.

3.   Method according to Claim 1 or 2 characterised in that the workpiece is constituted by the bottom of a shoe on a last, and the element by an insole which matches the last bottom.

4.   Method according to Claim 3 characterised in that the datum portion of the insole is the toe end portion thereof, and in that the transverse lines of the grid are more closely spaced adjacent the datum point thereof.

5.   Method according to any one of Claims 3 to 5 characterised in that the digitised co-ordinate axis values relating to the operating path of the tool from the ball region to the heel end of the insole are modified, according to the height of the heel of the shoe, by the computer control means.

6. Method according to any one of Claims 3 to 5 characterised in that the digitised co-ordinate axis values relating to the operating path of the tool over a portion of the insole extending over between 60 and 65% thereof from the heel end are modified, according to the height of the heel of the shoe, by the computer control means.

7. Method of determining an operating path of each of two tools in relation to a shoe bottom according to any one of Claims 3 to 6 - which tools are mounted on a common carrier movable along a linear path by a numerically controlled motor, the motors being caused to operate in response to drive signals generated and supplied thereto as aforesaid to move the tools simultaneously along opposite side portions of the shoe bottom and further each tool being resiliently urged heightwise of said linear path into engagement with the shoe bottom - characterised in that the points of intersection of both edge portions of the insole with each transverse line of the grid are read off and stored as aforesaid, thus providing two sets of digitised co-ordinate axis values, one for each side of the shoe bottom.

8. Machine for performing a shoemaking operation on shoe bottoms comprising a support for supporting a shoe comprising an upper and an insole carried on a last, and a tool for operating on the shoe bottom, wherein the tool is mounted on a carrier movable along a linear path, is movable relative to the carrier widthwise of such path, and is resiliently urged heightwise of said path into engagement with the workpiece surface, numerically controlled motors (as herein defined) being provided for effecting movement of the carrier along its path and of the tool widthwise of said path, said motors being caused to operate in response to drive signals generated and supplied thereto by computer control means in accordance with digitised information, including digitised co-ordinate axis values
for a plurality of selected points along the operating
path of the tool, the machine also comprising an input
device whereby information relating to such selected points
can be fed into a memory device and be stored therein,
in the form of digitised co-ordinate axis values, said
information being derived using a method as set out in
Claim 5 or Claim 6 characterised in that the tool (28;
176) is mounted for pivotal movement about an axis (80;
140) extending widthwise of the linear path of the tool
carrier (26), and in that the input device can also be
used for feeding in information concerning the height
of the heel of a shoe to be operated upon, such information
serving to modify the digitised co-ordinate axis values
relating to the operating path of the tool (26; 176)
in accordance with the heel height information thus stored,
such modifications also taking into account the distance
of the operating position of the tool (26; 176) from
its pivot (80; 140) and the position of said pivot (80;
140) in relation to the path of the tool carrier (26).

9. Machine according to Claim 8 wherein two
tools are provided constituted by two lasting rollers
for operating along opposite sides of the bottom of a
shoe supported by the shoe support, there being associated
with each lasting roller a numerically controlled motor
(as herein defined), characterised in that the input
device can also be used for feeding in information concerning the minimum allowable distance between the lasting
rollers (176), such information being effective to cause
the drive signals supplied as aforesaid to the motors
(146) for effecting widthwise movement of the lasting
rollers (176) to be modified accordingly.

10. Grid suitable for use in carrying out a
method according to Claim 1 characterised in that it comprises a datum point (10), a centre line (12), and
a plurality of lines (14a to m) arranged at spaced
intervals along the centre line (12) and extending transversely thereof, the transverse lines (14a to m) being
provided with a graduated scale (16), wherein the centre
line (12) represents a linear path of a carrier (26) for
a tool (28;176) the operating path of which is to be
determined in carrying out said method, and each interval
between adjacent transverse lines (14a to m) represents
a unit of time in the movement of the tool carrier (26)
along its linear path, wherein the intervals between
adjacent transverse lines (14a to m) of the grid are of
different lengths, said lines (14a to m) being arranged
more closely to each other where a principal component
of the movement of the tool (28; 176) along its operating
path is to be widthwise of the linear path of the tool
carrier (26), and being more spaced from one another where
a principal component of such movement is to be along
said linear path, and further characterised in that it is
made from transparent flexible sheet material.

0084949

LEFT COORDINATES

RIGHT COORDINATES

10

12

14a
14b
14c
14d
14e
14f
14g
16
14h
14i
16
14j
14k
14l
14m

*Fig_1*

Fig. 2